# FASCICULE DE BREVET EUROPEEN

(11) **EP 2 585 367 B1**
(45) Date de publication et mention de la délivrance du brevet: **23.04.2014**
(21) Numéro de dépôt: 11726870.6
(22) Date de dépôt: 16.05.2011
(51) Int. Cl.: B63B 35/79, B63B 7/00, B62B 15/00

(54) **DISPOSITIF GONFLABLE APTE A GLISSER, NOTAMMENT SUR L'EAU**
AUFBLASBARES GERÄT ZUM GLEITEN, INSBESONDERE AUF WASSER
INFLATABLE DEVICE FOR GLIDING, ESPECIALLY ON WATER

(30) Priorité: 23.06.2010 FR 1055018
(43) Date de publication de la demande: 01.05.2013
(73) Titulaire: Decathlon, 59650 Villeneuve d'Ascq (FR)
(72) Inventeur: SAHUN, Stephan, F-64310 Saint Pee Sur Nivelle (FR); CHRISTYN DE RIBAUCOURT, Jean, F-40220 Tarnos (FR); GALLET, Axelle, F-62000 Arras (FR); HELIE, Christophe, F-59155 FACHES THUMESNIL (FR)
(74) Mandataire: Balesta, Pierre
(86) Numéro de dépôt international: PCT/FR2011/051083
(87) Numéro de publication internationale: WO 2011/161342

(56) Documents cités:
- US-A- 5 101 752
- US-A1- 2007 238 375

## Description

La présente invention a pour objet un dispositif gonflable, apte à servir de support de glisse pour au moins une personne. Elle trouve notamment une application aux dispositifs de glisse sur l'eau de type « bodyboard », mais peut également s'applique au domaine de la glisse sur tout autre support que de l'eau, tel que la glisse sur neige.

Il existe déjà des dispositifs gonflables de type planche de surf, qui permette à une personne de glisser sur l'eau en se tenant debout sur la planche.

L'utilisateur peut également s'allonger sur la planche, mais une telle planche présente alors une instabilité que l'utilisateur peut essayer de compenser avec son corps mais qui peut rendre la planche difficile à utiliser, surtout lorsque celle-ci est courte, comme une planche de type « bodyboard » sur laquelle l'utilisateur ne pose que son buste.

Un utilisateur inexpérimenté a alors tendance à laisser la planche s'échapper par le dessous et peine à remonter sur cette planche, car celle-ci ne reste pas solidaire du corps de l'utilisateur, à l'exception des mains lorsque l'utilisateur saisit effectivement l'avant de la planche avec ses mains. Même dans ce dernier cas, le fait que l'utilisateur tienne le dispositif à l'avant avec ses mains n'empêche pas le dispositif de s'échapper par le dessous et par l'arrière, et donc n'empêche pas l'utilisateur de tomber de ce dispositif. Il peut bien sûr rapidement remonter sur le dispositif s'il le tient en permanence avec ses mains, mais il doit faire un effort pour remonter à chaque fois que la planche lui échappe.

Le document US 5 101 752 est consideré comme étant l'état de la technique le plus proche, et décrit un tel dispositif.

L'objet de la présente invention est donc d'apporter une solution au problème précité parmi d'autres problèmes.

En particulier, l'objet de la présente invention est de proposer un dispositif gonflable, apte à servir de support de glisse pour au moins une personne, notamment pour la glisse sur l'eau, qui soit léger et simple d'utilisation, y compris pour une personne inexpérimentée.

L'invention se rapporte ainsi à un dispositif gonflable apte à servir de support de glisse, notamment sur l'eau, pour au moins une personne, qui comprend au moins une première poche en matériau souple.

Cette première poche présente un moyen d'introduction d'un fluide, qui peut être du type simple ouverture ou en core valve d'admission, et est apte à être gonflée par ce fluide.

Le dispositif comprend en outre au moins un moyen de stabilisation connecté à la première poche. Ce moyen de stabilisation et apte à être disposé entre les jambes de la personne, ou à être solidarisé à la partie haute des jambes de la personne.

Le dispositif comprend également des moyens de positionnement des mains, qui sont de préférence disposés sur la première poche.

Par l'expression "moyens de positionnement des mains de préférence disposés sur la première poche", il faut comprendre des moyens qui sont de preference integrés à la première poche, ou placés sur cette première poche, ou tout simplement solidaires de cette première poche.

Ce moyen de stabilisation et ces moyens de positionnement sont tels qu'ils permettre la stabilisation du dispostif sous la personne pendant une phase de glisse.

Ces moyens de positionnement peuvent comprendre des moyens disposés à proximité d'un axe longitudinal central du dispositif.

Alternativement, ou en combinaison, ces moyens de positionnement peuvent comprendre deux moyens latéraux disposés respectivement à proximité de deux extrémités laterales de la première poche.

Dans tous les cas, les moyens de positionnement peuvent comprendre des moyens de calage des mains formés par déformation, de type un ou plusieurs creux et/ou bosses et/ou perforations, dans le matériau de la première poche.

Alternativement, ou en combinaison, les moyens de positionnement peuvent être aussi comprendre des moyens de préhension, notamment de type sangle ou poignée.

D'autres variantes du dispositif de l'invention sont présentées ci-après, qui peuvent être considérées seules ou en combinaison avec la précédente et/ou une ou plusieurs des autres variantes.

Le moyen de stabilisation peut comprendre au moins une deuxième poche en matériau souple et apte à être gonflée, par exemple au moyen d'une valve, par un fluide de manière indépendante de la première poche.

Le moyen de stabilisation peut également comprendre un element rigide.

Le moyen de stabilisation peut être disposé à l'opposé du moyen d'introduction d'un fluide. La première poche s'étend alors, dans son état gonflé, en se rétrécissant depuis ce moyen d'introduction d'un fluide vers le moyen de stabilisation.

Le moyen de stabilisation peut comprendre un element de logement apte à servir de logement pour le rangement du dispositif en position non gonflée.

Cet élément de logement peut être apte à servir de moyen de fermeture du moyen d'introduction d'un fluide de la première poche en position gonflée.

Par ailleurs, cet élément de logement peut comprendre une ou plusieurs coques ou portions de coque, telles que des demi-coques, de préférence en plastique, éventuellement connectées l'une à l'autre par une charnière.

Ces deux demi-coques peuvent être aptes à être refermées sur elles-mêmes pour constituer le logement pour le rangement du dispositif en position de la première poche non gonflée.

En outre, ces deux demi-coques peuvent être aptes à être refermées sur elles-mêmes autour de la première poche en position gonflée, pour constituer un moyen de fermeture du moyen d'introduction d'un fluide de la première poche dans la position gonflée.

Le moyen de stabilisation peut encore comprendre un ensemble comportant au moins une sangle apte à être solidarisée en partie haute des jambes de la personne, par exemple un ensemble de type baudrier.

La première poche peut être apte à être roulée partiellement sur elle-même depuis le moyen d'introduction d'un fluide en sorte de fermer ce moyen d'introduction d'un fluide. Le dispositif comprend alors un moyen de blocage apte à maintenir le moyen d'introduction d'un fluide fermé.

Le moyen d'introduction d'un fluide peut être une ouverture présentant au moins un bord pourvu d'une ou plusieurs lames en matériau rigide ou semi-rigide, par exemple de type polyéthylène.

La première poche peut présenter une surface de glisse et une surface support pour une personne, assemblées de préférence par soudure.

Le matériau utilisé pour la première poche et/ou éventuellement pour la deuxième poche est un matériau étanche et/ou un tissu laminé.

La forme d'ensemble de la première poche en position gonflée est sensiblement triangulaire. Le moyen de stabilisation est alors disposé au niveau ou à proximité d'un premier des trois angles de cette première poche triangulaire, en sorte de permettre le positionnement des deux épaules de la personne au niveau ou à proximité respectivement des deux autres angles de la poche triangulaire et le positionnement ou la solidarisation du moyen de stabilisation respectivement entre les, ou à la partie haute des, jambes de la personne.

Le moyen de stabilisation peut présenter lui-même également une forme d'ensemble sensiblement triangulaire. Il est alors connecté, par l'un de ses trois angles, à la première poche.

Le moyen d'introduction d'un fluide peut être une ouverture de dimension apte à permettre l'engouffrement d'air dans la première poche et son gonflage par simple mouvement de cette première poche tenue par la personne au niveau de son ouverture.

Alternativement, le moyen d'introduction d'un fluide peut être une valve principale, de preference disposée à proximité de la connexion entre la première poche et le moyen de stabilisation.

La première poche peut être pourvue d'une valve secondaire apte à permettre le réglage du gonflage de la première poche après fermeture du moyen d'introduction d'un fluide.

La fonction de valve principale et la fonction de valve secondaire peuvent éventuellement être remplie par la meme valve physique permettant par exemple une expulsion contrôlée de l'air.

Le dispositif peut comprendre un moyen de solidarisation apte à solidariser ce dispositif avec au moins un deuxième dispositif tel que présenté ci-dessus.

Ainsi, avantageusement, le dispositif selon l'invention permet à une personne de glisser, par exemple sur l'eau, de façon stable, en plaçant au moins son buste sur la première poche, après avoir gonflée celle-ci, et en plaçant le moyen de stabilisation entre ses jambes, ou en le solidarisant en partie haute de ses jambes.

Par ailleurs, les moyens de positionnement des mains, éventuellement combinés avec la forme d'ensemble sensiblement triangulaire, permettent de renforcer la stabilité.

Egalement, la forme d'ensemble du dispositif, ou au moins de la première poche, sensiblement triangulaire, c'est-à-dire en évasement, depuis l'arrière où la première poche est connectée au moyen de stabilisation, vers l'avant où l'utilisateur peut notamment poser ses mains, bras écartés, ou une forme d'ensemble présentant au moins trois angles, procure notamment l'avantage de renforcer encore la stabilité.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figure 1 : représentent schématiquement un premier exemple de dispositif selon l'invention,
- figures 2a, 2b : représentent schématiquement un deuxième exemple de dispositif selon l'invention, respectivement avec le moyen d'introduction d'un fluide dans la première poche ouvert et fermé,
- figure 3 : représente schématiquement un troisième exemple de dispositif selon l'invention,
- figure 4 : représente schématiquement le positionnement d'une personne sur un dispositif selon l'invention,
- figures 5a, 5b : représentent schématiquement un quatrième exemple de dispositif selon l'invention, respectivement avec le moyen d'introduction d'un fluide dans la première poche ouvert et fermé.

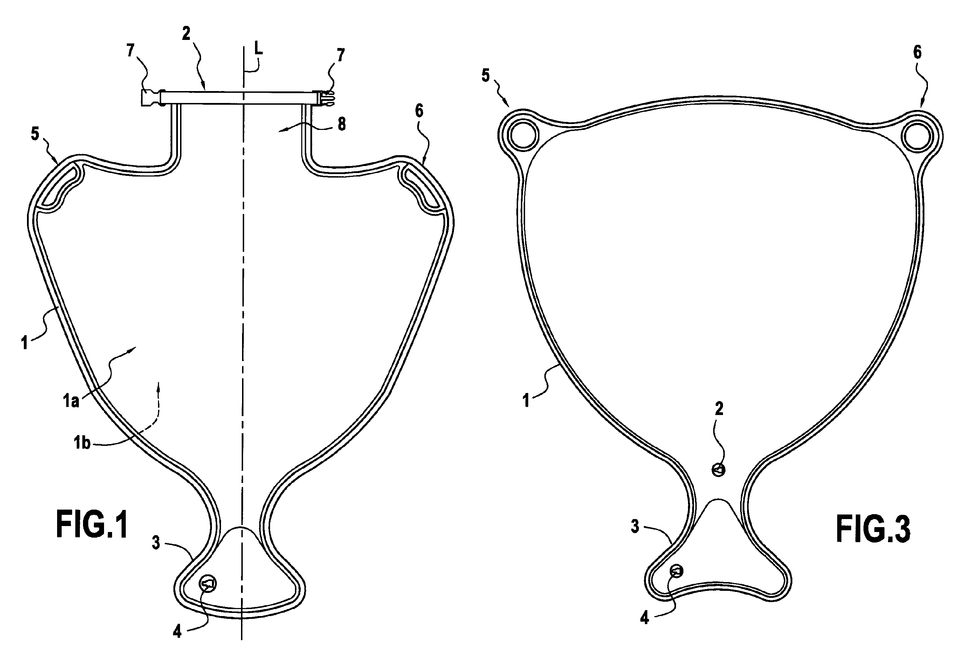

Tel que représenté en figure 1, dans un premier exemple de réalisation, le dispositif comprend une première partie 1 à l'avant, et une deuxième partie 3 à l'arrière.

Plus précisément, la première partie 1 est une poche gonflable 1 en matériau souple, qui présente un moyen 2 d'introduction d'un fluide, tel que de l'air, qui prend dans cet exemple la forme d'une ouverture 2.

Le matériau souple est de préférence un matériau étanche ou un tissu laminé, ou une combinaison des deux.

Ainsi, un utilisateur peut facilement obtenir le gonflage de la première poche 1 en tenant le dispositif au niveau de l'ouverture 2 de sorte à bien maintenir cette ouverture 2 ouverte, et en courant contre le vent, voire en restant immobile lorsque le vent est suffisamment fort.

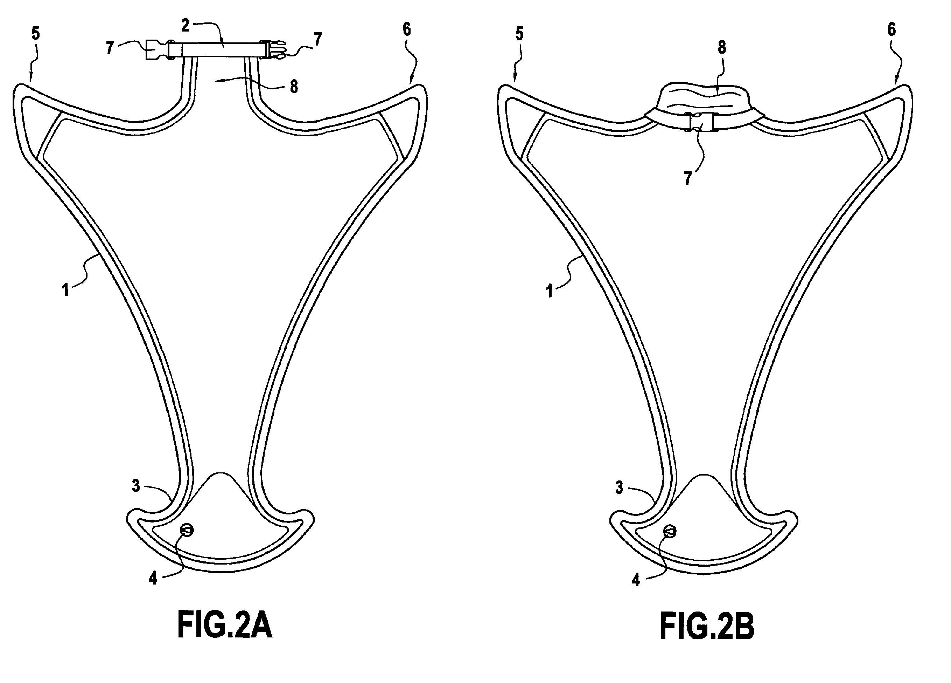

Comme on le verra plus loin dans un autre exemple, en référence aux figures 2a et 2b, la poche 1 se subdivise en une partie principale constituant principalement le support de glisse et un prolongement 8 au bout duquel se trouve l'ouverture 2.

Aussi, en repliant une ou plusieurs fois le prolongement 8 sur lui-même, on obtient la fermeture de l'ouverture 2. On peut alors bloquer cette ouverture 2 en position fermée grâce à un moyen de blocage 7. Ce moyen de blocage 7, et dans ces exemples de réalisation (figures 1, 2a, 2b) de type éléments male et femelle 7 clipsables disposés aux deux extrémités d'une sangle bordant l'ouverture 2.

Pour optimiser l'étanchéité, on peut prévoir qu'au moins un des bords de l'ouverture 2 soit pourvu d'une lame rigide ou semi-rigide, par exemple en polyéthylène, qui contraint ce bord à se refermer contre un bord opposé.

Par ailleurs, la première poche 1 est pourvue de moyens de positionnement des mains 5, 6 qui, dans l'exemple de la figure 1, prennent la forme de moyens de préhension latéraux de type poignées latérales 5, 6 disposées aux deux extrémités latérales de la poche 1.

Ces poignées 5, 6 peuvent être des poignées rigides ou semi-rigides, ou des poignées souples telles que des sangles.

De préférence, ces poignées intégrées dans ou rapportées sur la poche 1, présentent une haute résistance à la traction.

Alternativement, il est possible de remplacer de telles poignées 5, 6 par des moyens de calage des mains, formés par déformation dans le matériau de la poche 1. Il peut alors s'agir par exemple de bosses, de creux, de perforations, ou de combinaison de ces éléments.

Ainsi, la forme d'ensemble de la première poche 1, en position gonflée, ou non gonflée mais déployée, est sensiblement triangulaire, avec une pointe ou un angle en partie arrière en laquelle elle se connecte à un moyen de stabilisation 3 qui sera décrit plus loin, et deux pointes latérales ou angles latéraux en partie avant, en lesquels ou à proximité desquels, dans l'exemple représenté à la figure 1, sont disposés les moyens de positionnement des mains 5, 6.

Autrement dit, par forme sensiblement triangulaire, on entend ici une forme rétréci à l'arrière, au niveau de la connexion avec le moyen de stabilisation 3, que l'on assimile à la pointe ou l'angle arrière de la forme sensiblement triangulaire, forme qui s'évase ou s'élargit vers l'avant jusqu'aux extrémités latérales avant que l'on assimile aux deux pointes latérales ou angles latéraux avant de la forme sensiblement triangulaire.

Il est possible, alternativement, de placer les moyens de positionnement des mains 5, 6 en partie centrale, à proximité de l'axe longitudinal central (L) du dispositif.

Comme évoqué plus haut, la première poche 1 se connecte à un moyen de stabilisation 3 qui est apte à être maintenu entre les jambes de l'utilisateur.

Dans cet l'exemple de réalisation représenté à la figure 1, ce moyen de stabilisation 3 prend la forme d'une deuxième poche 3 en matériau souple apte à être gonflée indépendamment de la première poche 1, également de forme sensiblement triangulaire, avec une pointe ou un angle à l'avant qui se connecte à la première poche 1, et un évasement vers l'arrière où ce moyen de stabilisation s'élargit avec deux angles latéraux ou pointes latérales arrière.

Pour le gonflage de la deuxième poche 3 constituant, dans l'exemple représenté à la figure 1, le moyen de stabilisation, on prévoit un élément 4 d'admission de fluide, tel que de l'air, par exemple de type valve 4.

Comme pour la première poche gonflable 1, la deuxième poche gonflable 3 est de préférence dans un matériau étanche ou un tissu laminé, ou une combinaison des deux.

Tel qu'également représenté à la figure 1, la première poche 1 présente deux surfaces opposées 1a, 1b, assemblées par exemple par soudure. L'une des surfaces 1a est une surface de glisse, destinée à être en contact avec l'élément sur lequel on glisse, tel que la surface de l'eau. L'autre surface 1b, constitue la surface support 1b pour l'utilisateur.

En complément de la soudure d'assemblage des deux surfaces opposées 1a, 1b, on peut prévoir de réaliser un biais par couture sur tout le pourtour.

Le deuxième exemple de réalisation du dispositif, tel que présenté aux figures 2a et 2b, présente les mêmes caractéristiques que le dispositif représenté à la figure 1 et présenté ci-dessus, ces caractéristiques étant indiquées par les mêmes références numériques.

Seuls quelques détails de forme diffèrent entre l'exemple représenté à la figure 1 et l'exemple représenté aux figures 2a et 2b.

Ainsi, la forme d'ensemble de la première poche 1 est encore plus triangulaire dans l'exemple des figures 2a et 2b que dans l'exemple de la figure 1, le prolongement 8 étant quant à lui plus rétréci, et l'extrémité arrière du moyen de stabilisation 3 étant plus arrondie.

Ces figures 2a et 2b mettent plus particulièrement en évidence la façon de fermer l'ouverture 2 par enroulement du prolongement 8 puis blocage en position fermée par le moyen de blocage 7.

L'exemple représenté à la figure 3 présente également les mêmes caractéristiques que les exemples précédents indiquées par conséquent par les mêmes références numériques, à l'exception du moyen 2 d'introduction de fluide dans la première poche 1.

Ainsi, dans ce troisième exemple, le moyen 2 d'introduction de fluide dans la première poche 1, est une valve 2, dite valve principale 2.

Dans cet exemple, cette valve principale 2 est disposée en partie arrière de la première poche 1, à proximité de la connexion entre cette première poche 1 et la deuxième poche 3 correspondant au moyen de stabilisation 3.

Par ailleurs, les moyens de positionnement des mains 5, 6 sont constitués par des perforations 5, 6 directement dans la poche 1, sécurisées par des oeillets (pour garantir l'étanchéité et éviter que les bords des perforations ne se dégradent).

Par ailleurs, quelques autres détails de forme diffèrent dans cet exemple représenté à la figure 3 par rapport aux exemples représentés d'une part à la figure 1 et d'autre part aux figures 2a et 2b.

Ainsi, la forme d'ensemble de la première poche 1, si elle reste sensiblement triangulaire, présente des côtés latéraux et avant plus arrondis, et l'extrémité arrière du moyen de stabilisation 3 est arrondie concave.

En outre, dans cet exemple de la figure 3, il n'y a plus de prolongement 8, ni de moyen de blocage 7 puisque l'ouverture 2 est remplacée par une valve 2.

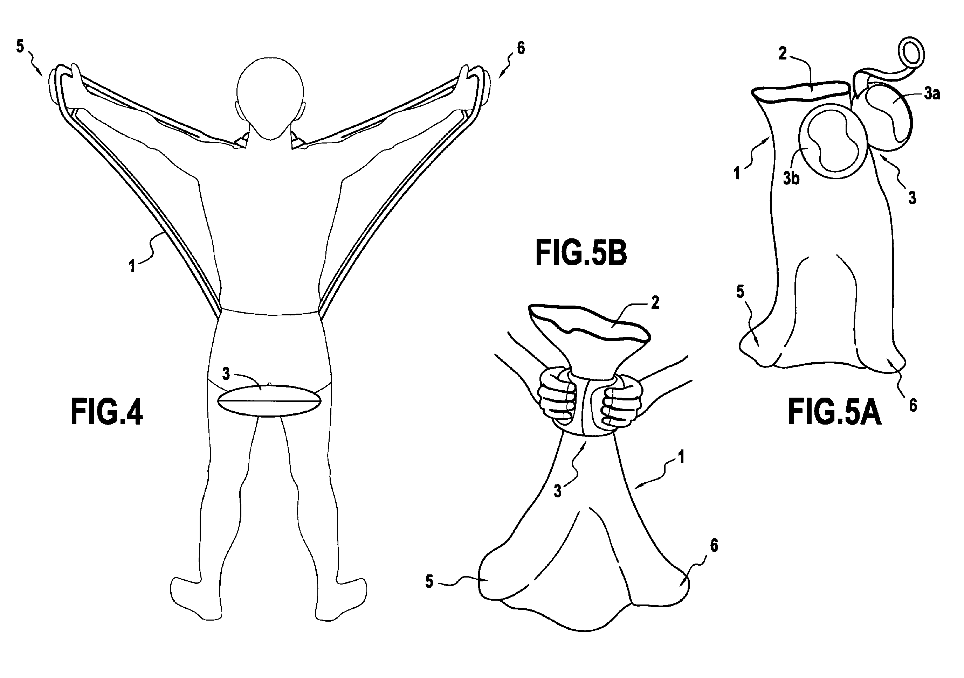

On a représenté à la figure 4 une personne debout, le dispositif selon l'invention contre son corps, simulant ainsi la position de glisse allongée.

Cette représentation schématique permet de mettre en évidence la mise en place du moyen de stabilisation 3 entre les jambes de la personne, et le positionnement des mains sur ou dans les moyens de positionnement 5 et 6, représentés sur la figure 4 par des sangles 5, 6, bras écartés.

La poche 1 de forme sensiblement triangulaire offre ainsi une surface inférieure de glisse, et une surface supérieure de support pour au moins une partie du corps de la personne, à savoir son buste.

Cette forme sensiblement triangulaire permet ainsi d'obtenir une position de glisse optimale, et assure en outre une bonne répartition des points de tension.

On a par ailleurs représenté aux figures 5a et 5b, encore un autre exemple de dispositif selon l'invention.

Dans cet exemple, l'ensemble du dispositif se présente sous la forme d'une poche 1 qui, de préférence, s'évase depuis son ouverture 2 jusqu'à son extrémité opposée, combiné avec un moyen de stabilisation 3 qui peut être rigide, semi-rigide ou souple, qui est constitué de deux demi coques 3a, 3b.

En position non gonflée, et avec l'ouverture 2 dans la poche 1 non fermée, le moyen de stabilisation 3 formé des deux demi-coques 3a, 3b peut être totalement désolidarisé de la poche 1, ou attaché à cette poche 1 par exemple au moyen d'un lien.

Par ailleurs, les deux demi-coques peuvent être reliées entre elles par une charnière.

Une fois que la quantité d'air suffisante pour assurer un bon gonflage de la poche 1 a pénétré dans cette poche 1, on referme l'ouverture 2 en refermant les deux demi-coques 3a, 3b l'une sur l'autre, autour de la poche 1 à proximité de son ouverture 2.

Dans cette variante, le moyen de stabilisation 3 sert donc à la fois d'élément de stabilisation et d'élément de fermeture de la poche 1.

Eventuellement, ce moyen de stabilisation 3 peut aussi servir de logement pour ranger la poche 1 dégonflée, pour autant que les deux demi-coques 3a, 3b ne soient pas totalement pleines et présentent donc au moins un léger creux.

Les extrémités latérales 5, 6 de la poche 1, opposées à l'ouverture servent alors de moyen de positionnement des mains 5, 6, grâce par exemple à des creux ou des bosses présents en ces angles 5, 6 une fois la poche 1 gonflée. On peut également prévoir, en plus ou alternativement, des moyens de positionnement spécifiques rapportés sur cette poche 1 par exemple de type sangle éventuellement réglable.

Il faut noter que le dispositif peut aussi être utilisé de façon opposée.

En effet, le dispositif des figures 5a et 5b est présenté ci-dessus avec le moyen 3 de stabilisation proche de l'ouverture 2, à l'opposé des moyens 5, 6 de positionnement des mains. L'ouverture 2 et ce moyen 3 de stabilisation sont donc destinés à être positionnés, en cours de glisse, vers l'arrière. Par ailleurs, la partie portant les moyens 5, 6 de positionnement des mains est donc destinée à être positionnée vers l'avant.

Mais ce même dispositif représenté aux figures 5a, 5b, avec des moyens 5, 6 appropriés tels des sangles réglables, peut effectivement être utilisé de façon opposé.

Ainsi, les moyens 5, 6 tels des sangles réglables peuvent également servir à la solidarisation de la partie haute des jambes, et jouer ainsi le rôle de moyen de stabilisation.

Par ailleurs le moyen 3, disposé sensiblement le long de l'axe longitudinal central, peut jouer le rôle de moyen de positionnement des mains grâce à une forme facilitant la préhension (par exemple simple forme sphérique, ou ajout de bossages ou de creux).

Dans cette utilisation, l'ouverture 2 et le moyen 3 jouant cette fois le rôle de moyen de positionnement des mains sont donc destinés à être positionnés, en cours de glisse, vers l'avant. Par ailleurs, la partie portant les moyens 5, 6 jouant cette fois le rôle de moyen de stabilisation est donc destinée à être positionnée vers l'arrière.

Ces explications relatives à une double utilisation du dispositif selon l'invention, dans un sens, ou dans le sens opposé, s'appliquent aux autres modes de réalisation tels que ceux présentés en référence aux figures 1, 2a, 2b, 3 et 4, l'arrière du dispositif dans une première utilisation devenant l'avant dans une deuxième utilisation et vice et versa.

Quelques soient les exemples de réalisation, la première poche 1 peut être pourvue d'une valve dite valve secondaire, permettant de régler le gonflage une fois que le moyen 2 d'introduction d'un fluide est fermé.

On peut aussi prévoir de solidariser plusieurs dispositifs selon l'invention ensemble, grâce à un moyen de solidarisation longitudinal ou latéral, par exemple de type sangles, pour permettre à plusieurs personnes de glisser en même temps, côte à côte ou les uns derrière les autres.

La présente description est donnée à titre d'exemple et n'est donc pas limitative de l'invention.

En particulier, la forme exacte de la première poche 1 et du moyen de stabilisation 3 ne sont pas limitatives de l'invention. Ces formes sont préférentiellement sensiblement triangulaires, en particulier pour la première poche 1, sans être nécessairement strictement triangulaire, avec un évasement depuis l'arrière où la première poche 1 est connectée au moyen de stabilisation vers l'avant ou l'utilisateur est sensé poser ses mains, bras écartés.

Par ailleurs, bien que seuls des moyens de stabilisations 3 aptes à être positionnés entre les jambes de l'utilisateur aient été décrits, l'invention s'étend également à des moyens de stabilisation aptes à être solidarisés à la partie haute des jambes de l'utilisateur, tel qu'un baudrier ou autre système de sanglage.

Egalement, le moyen de stabilisation 3 ne se limite pas à un moyen constitué uniquement de l'un ou l'autre des éléments 3 donnés dans les exemple ci-dessus, tel qu'une poche gonflable 3, un baudrier, un élément rigide 3a, 3b, mais peut comprendre un de ces éléments, ou une combinaison de plusieurs de ces éléments.

On rappellera encore que le moyen de stabilisation n'est pas nécessairement constitué d'une poche souple gonflable, et, quelque soit sa forme d'ensemble, peut très bien être constitué d'un, ou comprendre un, élément rigide.

On rappellera également que le dispositif selon l'invention peut très bien être utilisé dans deux sens opposés, l'arrière du dispositif dans une utilisation devenant l'avant dans l'utilisation opposée et vice et versa, tel que cela a été évoqué à titre d'exemple en référence aux figures 5a et 5b mais qui est applicable aux autres exemples. Il est nécessaire, pour cela, que le moyen de stabilisation soit effectivement apte à servir de moyen de stabilisation selon l'invention dans une première utilisation, et de moyen de positionnement des mains dans une deuxième utilisation, les moyens de positionnement des mains, de leur côté, étant effectivement apte à servir de moyen de positionnement des mains dans la première utilisation, et de moyen de stabilisation dans la deuxième utilisation.

## Revendications

1. Dispositif gonflable apte à servir de support de glisse, notamment sur l'eau, pour au moins une personne, ledit dispositif comprenant au moins une première poche (1) en matériau souple, ladite première poche (1) présentant un moyen (2) d'introduction d'un fluide et étant apte à être gonflée par ledit fluide,
**caractérisé en ce qu'**il comprend en outre au moins un moyen de stabilisation (3) connecté à ladite première poche (1) et apte à être disposé entre les, ou solidarisé à la partie haute des, jambes de la personne, et des moyens de positionnement (5, 6) des mains, de préférence disposés sur la première poche (1),
en sorte de permettre la stabilisation du dispositif sous la personne pendant une phase de glisse.

2. Dispositif selon la revendication **1**, **caractérisé en ce que** les moyens de positionnement (5, 6) comprennent des moyens disposés à proximité d'un axe longitudinal central (L) dudit dispositif.

3. Dispositif selon l'une quelconque des revendications **1** et **2**, **caractérisé en ce que** les moyens de positionnement (5, 6) comprennent deux moyens latéraux (5, 6) disposés respectivement à proximité de deux extrémités latérales de la première poche (1).

4. Dispositif selon l'une quelconque des revendications **1 à 3**, **caractérisé en ce que** les moyens de positionnement (5, 6) comprennent des moyens de calage des mains formés par déformation, de type un ou plusieurs creux et/ou bosses et/ou perforations, dans le matériau de la première poche (1).

5. Dispositif selon l'une quelconque des revendications **1 à 4**, **caractérisé en ce que** les moyens de positionnement (5, 6) comprennent des moyens de préhension, notamment de type sangle ou poignée.

6. Dispositif selon l'une quelconque des revendications **1 à 5**, **caractérisé en ce que** le moyen de stabilisation (3) comprend au moins une deuxième poche (3) en matériau souple et apte à être gonflée, par exemple au moyen d'une valve (4), par un fluide de manière indépendante de la première poche (1).

7. Dispositif selon l'une quelconque des revendications **1 à 6**, **caractérisé en ce que** le moyen de stabilisation (3) comprend un élément rigide (3).

8. Dispositif selon l'une quelconque des revendications **1 à 7**, **caractérisé en ce que** le moyen de stabilisation (3) est disposé à l'opposé du moyen (2) d'introduction d'un fluide, et **en ce que** la première poche (1) s'étend, dans son état gonflé, en se rétrécissant depuis ledit moyen (2) d'introduction d'un fluide vers le moyen de stabilisation (3).

9. Dispositif selon l'une quelconque des revendications **1 à 8**, **caractérisé en ce que** le moyen (2) d'introduction d'un fluide est une ouverture (2) présentant au moins un bord pourvu d'une ou plusieurs lames en matériau rigide ou semi-rigide, par exemple de type polyéthylène.

10. Dispositif selon l'une quelconque des revendications **1 à 9**, **caractérisé en ce que** la première poche (1) présente une surface de glisse (1a) et une surface support (1b) pour une personne, assemblées de préférence par soudure.

11. Dispositif selon l'une quelconque des revendications **1 à 10**, **caractérisé en ce que** le matériau utilisé pour la première poche (1) et/ou la deuxième poche (3) est un matériau étanche et/ou un tissu laminé.

12. Dispositif selon l'une quelconque des revendications **1 à 11**, **caractérisé en ce que** la forme d'ensemble de la première poche (1) en position gonflée est sensiblement triangulaire, le moyen de stabilisation (3) étant disposé au niveau ou à proximité d'un premier des trois angles de ladite première poche (1) triangulaire, en sorte de permettre le positionnement des deux épaules de la personne au niveau ou à proximité respectivement des deux autres angles de ladite poche triangulaire (1) et le positionnement ou la solidarisation dudit moyen de stabilisation (3) respectivement entre les, ou à la partie haute des, jambes de ladite personne.

13. Dispositif selon la revendication **12**, **caractérisé en ce que** le moyen de stabilisation (3) présente une forme d'ensemble sensiblement triangulaire et est connecté, par l'un de ses trois angles, à la première poche (1).

14. Dispositif selon l'une quelconque des revendications **1 à 13**, **caractérisé en ce que** le moyen (2) d'introduction d'un fluide est une ouverture (2) de dimension apte à permettre l'engouffrement d'air dans la première poche (1) et son gonflage par simple mouvement de cette dite première poche (1) tenue par la personne au niveau de sa dite ouverture (2).

15. Dispositif selon l'une quelconque des revendications **1 à 14**, **caractérisé en ce que** la première poche (1) est pourvue d'une valve secondaire apte à permettre le réglage du gonflage de ladite première poche (1) après fermeture du moyen (2) d'introduction d'un fluide.

## Patentansprüche

1. Aufblasbare Vorrichtung, die geeignet ist, als Gleitträger, insbesondere auf dem Wasser, für wenigstens eine Person zu dienen, wobei die Vorrichtung wenigstens eine erste Tasche (1) aus flexiblem Material umfasst, wobei die erste Tasche (1) ein Mittel (2) zum Einleiten eines Fluids aufweist und geeignet ist, mit dem Fluid aufgeblasen zu werden,
**dadurch gekennzeichnet, dass** sie ferner wenigstens ein Stabilisierungsmittel (3), das mit der ersten Tasche (1) verbunden und geeignet ist, zwischen den Beinen der Person angeordnet oder mit deren oberen Teil fest verbunden zu werden, sowie Mittel zur Positionierung (5, 6) der Hände, die vorzugsweise an der ersten Tasche (1) angeordnet sind, umfasst,
um die Stabilisierung der Vorrichtung unter der Person während einer Gleitphase zu ermöglichen.

2. Vorrichtung nach Anspruch 1, **dadurch gekennzeichnet, dass** die Positionierungsmittel (5, 6) Mittel umfassen, welche in der Nähe einer Mittellängsachse (L) der Vorrichtung angeordnet sind.

3. Vorrichtung nach einem der Ansprüche 1 und 2, **dadurch gekennzeichnet, dass** die Positionierungsmittel (5, 6) zwei seitliche Mittel (5, 6) umfassen, die jeweils in der Nähe von zwei Seitenenden der ersten Tasche (1) angeordnet sind.

4. Vorrichtung nach einem der Ansprüche 1 bis 3, **dadurch gekennzeichnet, dass** die Positionierungsmittel (5, 6) durch Verformung gebildete Mittel zum Festhalten der Hände, vom Typ ein(e) oder mehrere Vertiefungen und/oder Buckel und/oder Löcher, in dem Material der ersten Tasche (1) umfassen.

5. Vorrichtung nach einem der Ansprüche 1 bis 4, **dadurch gekennzeichnet, dass** die Positionierungsmittel (5, 6) Greifmittel, insbesondere vom Typ Gurt oder Griff umfassen.

6. Vorrichtung nach einem der Ansprüche 1 bis 5, **dadurch gekennzeichnet, dass** das Stabilisierungsmittel (3) wenigstens eine zweite Tasche (3) aus flexiblem Material umfasst, die geeignet ist, beispielsweise mittels eines Ventils (4) mit einem Fluid unabhängig von der ersten Tasche (1) aufgeblasen zu werden.

7. Vorrichtung nach einem der Ansprüche 1 bis 6, **dadurch gekennzeichnet, dass** das Stabilisierungsmittel (3) ein starres Element (3) umfasst.

8. Vorrichtung nach einem der Ansprüche 1 bis 7, **dadurch gekennzeichnet, dass** das Stabilisierungsmittel (3) zu dem Mittel (2) zum Einleiten eines Fluids entgegengesetzt angeordnet ist und dass die erste Tasche (1) in ihrem aufgeblasenen Zustand sich von dem Mittel (2) zum Einleiten eines Fluids zu dem Stabilisierungsmittel (3) hin verjüngend verläuft.

9. Vorrichtung nach einem der Ansprüche 1 bis 8, **dadurch gekennzeichnet, dass** das Mittel (2) zum Einleiten eines Fluids eine Öffnung (2) ist, die wenigstens einen Rand aufweist, der mit einem oder mehreren Streifen aus starrem oder halbstarrem Material, beispielsweise vom Typ Polyethylen versehen ist.

10. Vorrichtung nach einem der Ansprüche 1 bis 9, **dadurch gekennzeichnet, dass** die erste Tasche (1) eine Gleitfläche (1 a) und eine Tragfläche (1 b) für eine Person aufweist, die vorzugsweise durch Schweißen verbunden sind.

11. Vorrichtung nach einem der Ansprüche 1 bis 10, **dadurch gekennzeichnet, dass** das für die erste Tasche (1) und/oder die zweite Tasche (3) verwendete Material ein dichtes Material und/oder ein laminiertes Gewebe ist.

12. Vorrichtung nach einem der Ansprüche 1 bis 11, **dadurch gekennzeichnet, dass** die Gesamtform der ersten Tasche (1) in aufgeblasener Position im Wesentlichen dreieckig ist, wobei das Stabilisierungsmittel (3) im Bereich oder in der Nähe einer ersten der drei Ecken der dreieckigen ersten Tasche (1) angeordnet ist, um das Positionieren der beiden Schultern der Person im Bereich oder in der Nähe jeweils der beiden anderen Ecken der dreieckigen Tasche (1) sowie das Positionieren oder das feste Verbinden des Stabilisierungsmittels (3) jeweils zwischen den Beinen der Person oder an deren oberen Teil zu ermöglichen.

13. Vorrichtung nach Anspruch 12, **dadurch gekennzeichnet, dass** das Stabilisierungsmittel (3) eine im Wesentlichen dreieckige Gesamtform aufweist und durch eine seiner drei Ecken mit der ersten Tasche (1) verbunden ist.

14. Vorrichtung nach einem der Ansprüche 1 bis 13, **dadurch gekennzeichnet, dass** das Mittel (2) zum Einleiten eines Fluids eine Öffnung (2) ist, die eine Abmessung aufweist, welche geeignet ist, das Hineinströmen von Luft in die erste Tasche (1) und deren Aufblasen durch einfaches Bewegen dieser ersten Tasche (1), welche durch die Person im Bereich ihrer Öffnung (2) gehalten wird, zu ermöglichen.

15. Vorrichtung nach einem der Ansprüche 1 bis 14, **dadurch gekennzeichnet, dass** die erste Tasche (1) mit einem Sekundärventil versehen ist, das geeignet ist, die Einstellung des Aufblasens der ersten Tasche (1) nach Verschließen des Mittels (2) zum Einleiten eines Fluids zu ermöglichen.

## Claims

1. An inflatable device capable of acting as glide medium, over water in particular, for at least one person, said device comprising at least one first bag (1) in flexible material, said first bag (1) having means (2) for feeding a fluid therein and being capable of being inflated by said fluid,
**characterized in that** it further comprises at least one stabilization means (3) connected to said first bag (1) and capable of being arranged between or secured to the upper portion of a person's legs, and means (5, 6) for positioning the hands preferably arranged on the first bag (1),
so as to allow the stabilization of the device underneath the person during a gliding phase.

2. The device according to claim 1, **characterized in that** the positioning means (5, 6) comprise means arranged in the vicinity of a central longitudinal axis (L) of said device.

3. The device according to any of claims 1 and 2, **characterized in that** the positioning means (5, 6) comprise two lateral means (5, 6) respectively arranged in the vicinity of two side ends of the first bag (1).

4. The device according to any of claims 1 to 3, **characterized in that** the positioning means (5, 6) comprise hand grip means formed by deformation of the type of one or more hollows and/or humps and/or perforations in the material of the first bag (1).

5. The device according to any of claims 1 to 4, **characterized in that** the positioning means (5, 6) comprise grasping means, in particular of strap or handle type.

6. The device according to any of claims 1 to 5, **characterized in that** the stabilization means (3) comprise at least one second bag (3) in flexible material and capable of being inflated with a fluid, for example by means of a valve (4), independently of the first bag (1).

7. The device according to any of claims 1 to 6, **characterized in that** the stabilization means (3) comprise a rigid element (3).

8. The device according to any of claims 1 to 7, **characterized in that** the stabilization means (3) are arranged opposite the fluid feed inlet means (2) and **in that** the first bag (1) in its inflated state extends by tapering from said fluid feed inlet means (2) towards the stabilization means (3).

9. The device according to any of claims 1 to 8, **characterized in that** the fluid feed inlet means (2) are an opening (2) having at least one edge provided with one or more strips in rigid or semi-rigid material, for example of polyethylene type.

10. The device according to any of claims 1 to 9, **characterized in that** the first bag (1) has a glide surface (1a) and a support surface (1b) for a person, preferably assembled by welding.

11. The device according to any of claims 1 to 10, **characterized in that** the material used for the first bag (1) and/or the second bag (3) is an impermeable material and/or a laminated fabric.

12. The device according to any of claims 1 to 11, **characterized in that** the overall shape of the first bag (1) in inflated position is substantially triangular, the stabilization means (3) being arranged at or in the vicinity of a first of the three corners of said first triangular bag (1) so as to allow the positioning of the two shoulders of the person at or close to the two other corners respectively of said triangular bag (1) and the positioning or securing of said stabilization means (3) respectively between or to the upper portion of the legs of said person.

13. The device according to claim 12, **characterized in that** the stabilization means (3) have a substantially triangular overall shape and are connected via one of their three corners to the first bag (1).

14. The device according to any of claims 1 to 13, **characterized in that** the fluid feed inlet means (2) are an opening (2) of size capable of allowing the inflow of air into the first bag (1) and the inflating thereof by mere movement of this said first bag (1) held by the person at its said opening (2).

15. The device according to any of claims 1 to 14, **characterized in that** the first bag (1) is provided with a secondary valve capable of allowing the adjustment of the inflation of said first bag (1) after closing the fluid feed inlet means (2).
